# EUROPEAN PATENT APPLICATION

(11) **EP 1 273 412 A1**
(43) Date of publication of application: **08.01.2003**
(21) Application number: 01830444.4
(22) Date of filing: 02.07.2001
(51) Int. Cl.: B29B 7/88, B29B 17/00, B29C 47/10

(54) **Process and apparatus for the production of filled thermoplastic polymers**

(71) Applicant: Magma Trade di Mauro Magni & C.snc, 65016 Montesilvano (PE) (IT)
(72) Inventor: Magni, Mauro, 65016 Montesilvano (PE) (IT); Delzotto, Giuseppe, 65016 Montesilvano Omilano (IT)
(74) Representative: Gislon, Gabriele

(57) **Abstract**

To produce filled thermoplastic polymers starting from a polymeric base in particular to be recycled, a base thermoplastic material is fed into a container (1) provided with a device for mixing and stirring (2,3) in which the base thermoplastic material is softened, the required filler is fed into said device and stirring continues, subsequently collecting the softened and filled material from said container and subjecting it to at least a densification step.

## Description

The present invention relates to a process and an apparatus for producing filled thermoplastic polymers. More particularly, the invention relates to a process and an apparatus for producing thermoplastic polymeric materials filled with inert fillers, also known as "compounds".

Inert fillers, i.e. fillers which do not react with the base polymer, are commonly added to thermoplastic polymers, their main functions being to reduce the cost of the product, the cooling times of the moulded piece and to provide the filled polymer with different technical features with respect to the initial polymer. Examples of fillers are calcium carbonate, wood flour, talcum powder and glass fibres. The amount of filler added generally varies from 15 to 80% in weight of the polymeric base and preferably it is comprised between 30 and 70% in weight.

According to the prior art, the desired fillers are added to thermoplastic polymers after the polymeric material has been brought to a molten state. For example, the polymeric material in the form of granules is fed into an extruder and the filler is fed in one or more points of the cylinder of the extrusion screw after melting and plasticizing the resin; on delivery, the filled material is granulated again. The main disadvantage of this process is that one starts with material in the form of granules or pellets to again obtain granules or pellets of the filled material. To obviate this problem it was proposed to fill the polymers during the phase in which these are processed, for example during the extrusion process of the final product; however, these solutions have only proved to be applicable in part, as the final user of the material prefers to use a compound already with the necessary filler for obvious reasons of simplicity and lower costs for processing and moulding and extrusion machinery.

Therefore it becomes necessary to produce a thermoplastic compound, i.e. a polymeric base filled with inert fillers, at lower costs than those currently available.

The object of the present invention is to solve the problem mentioned above by implementing a process to produce filled thermoplastic materials at a lower cost than those produced with traditional processes and able to provide a product (that is, a filled granule) with an substantially constant composition, specifically with a substantially uniform percentage of filler in the granules produced.

This object is attained by means of the present invention, concerning a process to produce filled thermoplastic polymers according to claim 1.

Another object of the patent is an apparatus to produce filled thermoplastic polymers consistent with the aforesaid process, characterized according to claim 6.

According to a preferred embodiment of the invention, the polymeric base is industrial waste material and is softened by being stirred and disintegrated in a vertical container, also called "hot mill", where the heat required to soften the base polymeric material is provided by the friction generated by stirring the material.

According to another aspect of the invention, the process is performed continually by loading the container from the top and removing the softened and filled polymeric base from the bottom; the filler is fed in the lower part of the container, where the polymeric base is in a softened state.

According to a further preferred aspect of the invention, the filler is fed in a controlled manner by means of a gravimetric metering device and the outlet of means for feeding the filler into the container is screened against the flow of softened material.

The process and apparatus according to the invention allows to obtain a filled material, that is to say a "compound", from industrial scraps or waste, with much lower costs than traditional processes; the reduction in costs is generally about 30% and may reach 50%. The percentage of filler in the final product is constant and may reach up to 70% of the total weight.

The invention shall now be discussed in greater detail with reference to the annexed drawings as a non-limiting illustrative example, in which:
- fig. 1 is a schematic view of an apparatus according to the invention;
- fig. 2 is a schematic top view of the container and part of the devices connected to this;
- fig. 3 is a schematic side view of a gravimetric loading device and its connection to the container; and
- fig. 4 is a schematic view of a detail of the outlet of the filler feed in the stirring container.

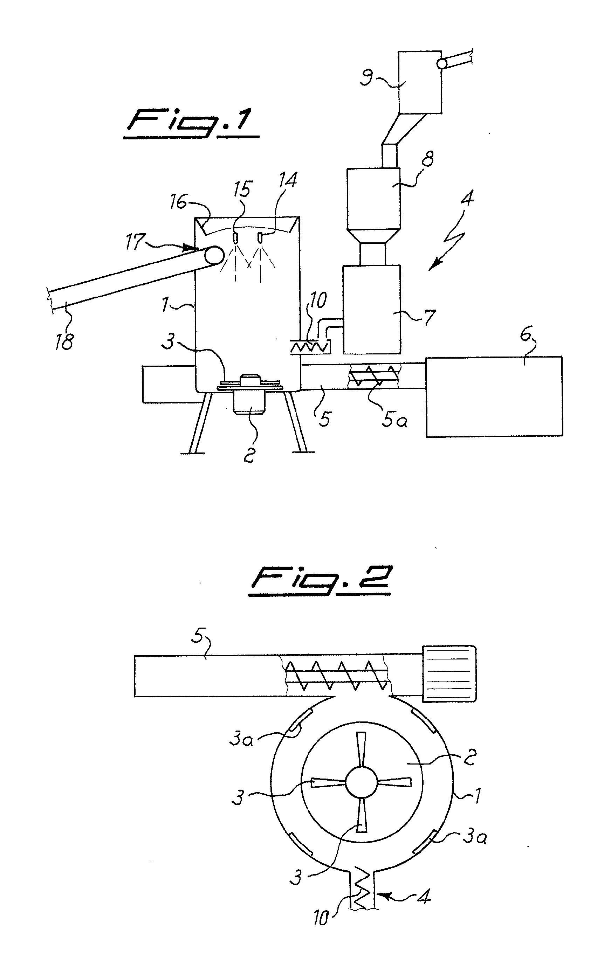

As can be seen in fig. 1, the apparatus, or system, according to the invention comprises a basin or vertical container 1 provided with a stirring element 2 fitted rotatably on the base of the container and provided with a plurality of blades 3. Further blades 3a are fitted stationary on the wall and collaborate with the blades 3 to stir and disintegrate the thermoplastic material and soften it without melting it. On a side of container 1 and communicating with it are means 4 for feeding a filler, for example calcium carbonate, to the container and further means 5 to collect the final material that is to say the softened polymeric base with the filler added from the container. The material is subjected to at least one step of densification by increasing its bulk density, or similar step, to obtain a material easy to use in subsequent processing. These steps can be performed immediately or subsequently; it is preferable to perform a granulation of the material immediately. The means for collecting and processing the softened material are preferably composed of an extruder 5 that can vary in length according to the plasticization to be given to the material.

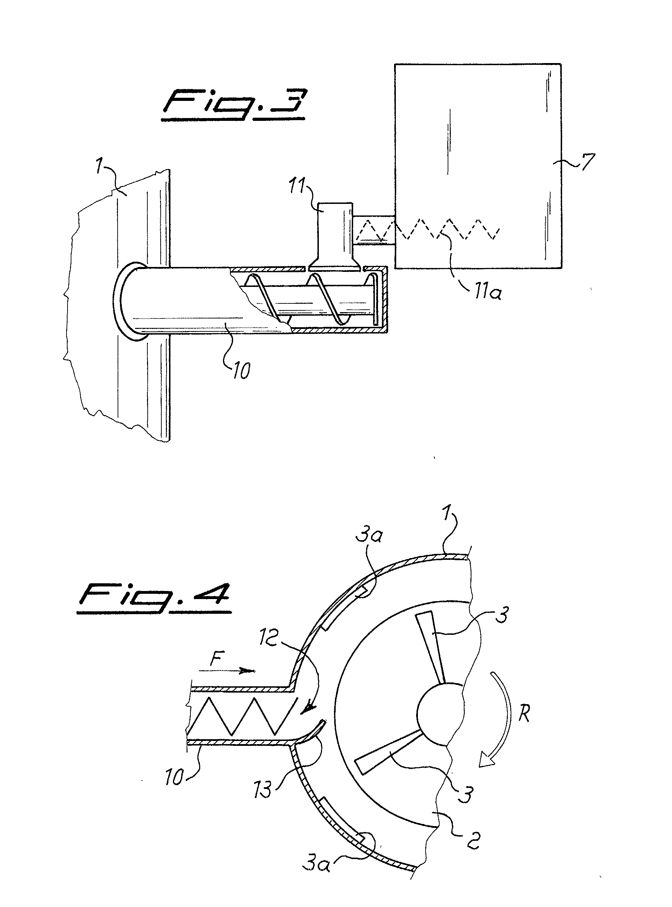

In the embodiment shown in the accompanying figures, the means 5 are composed of an extruder, provided in known manner with a screw 5a and means for filtering, degassing etc., known to the art and not shown in detail in fig. 1 and 2. At the end of the extruder is a pelletizing device or granulator. Filter, degassing device and granulator are indicated with reference 6. An apparatus of the type described above is known for example from the patent US-A-4,222,728 in the name of Kraus-Maffei, Asten, Austria and is used to recycle thermoplastic material in the form of scrap or waste from industrial processes.

The extruder 5 is positioned tangentially to the container 1 and communicates with it through an opening 19, although in other embodiments the extruder can be positioned radially; the extruder attached to the container may be of the traditional or two-screw type, either horizontal or vertical, and in one embodiment it is provided with further means to feed further filler, for example a different filler from the first, to the treated material.

The means to feed the filler comprise a metering device 7 that receives the filler material from a silo 8, which is in turn connected to a "drawing" silo which receives the filler from external storage silos (not shown). The metering device 7 feeds the filler to a screw 10 that has its outlet in the container 1.

Preferably, the metering device 7 is a gravimetric metering device, such as the one shown schematically in fig. 3. According to a preferred embodiment, the gravimetric metering device 7 is fitted suspended on a dedicated structure so that it is physically detached from the screw 10 that pushes the filler into the container 1. As can be seen, the metering device takes the weighed filler to an inverted hopper 11 by means of a first screw 11a, the filler falls into the feed screw 10, which is positioned under and adjacent to the metering device 7 and to the hopper 11 without being physically connected to these elements, while it is fixed to the container 1. The use of a "suspended" gravimetric metering device makes it possible to obtain an extremely high constancy and uniformity in the percentage of filler in the final material.

Preferably, the outlet 12 of the screw 10 is located in the lower portion of the container 1, i.e. in the portion of the container where the thermoplastic material has been softened by the disintegrating and stirring action performed by the blades 3 and 3a. In this way the dispersion of dusts from the filler material into the environment is significantly reduced.

As the stirring speed of the material is particularly high, in the range of 700-1200 rpm and preferably 800-1000 rpm, to avoid interference in the feed of filler to the material, outlet 12 is protected by a screen 13 positioned upstream of the outlet 12 in relation to the movement of the material, indicated with arrow R in fig. 4.

Positioned in the upper portion of the container 1 are nozzles 14 and 15 to feed, preferably by nebulization, water and oil respectively. Water is fed when the temperature of the material in the lower area, which rotates faster, reaches a limit value (measured in known way) above which the material may pass from its softened state to a molten state. Upon contact with the hot polymeric material the water evaporates and cools the mass being stirred forming steam that is treated in a know way, for example by aspiration through an exhaust fan (not shown). The function of the oil, which may be mineral or of vegetable origin, is to "wet" the dusty filler and prevent or limit dust from exiting the container. For this purpose the container is provided at the top with a ring 16 facing inward and tilting downward.

Operation of the apparatus according to the process relating to the present invention is preferably continuous, as follows.

The material is fed to the container 1 through the inlet 17 by means of an elevator-conveyor 18 and falls into the vertical container, that is to say the "hot mill" 1 where it is stirred, disintegrated and softened by blades 3 and 3a. The quantity of material fed is known, for example because it is weighed in advance or because it is measured by one or more load cells while being fed along the conveyor 18. According to the quantity and percentage of filler desired, the metering device 7 feeds a corresponding amount of filler to the container by means of screw 11a and screw 10. This metering is particularly accurate thanks to the use of the gravimetric metering device and the screen 13 protecting outlet 12 of screw 10. In fact, thanks to this it is not necessary to adopt powerful feed means, which moreover would not be feasible in view of the physical separation required between the screw 10 and the gravimetric metering device 7 and the consequent uncovered opening located below the hopper 11. Simultaneously, a reduced quantity of oil is nebulized through nozzles 15 to prevent dusts from forming.

The temperature of the material is controlled by sensors and, if it reaches a pre-established threshold, for example in the range of 130-140° for polypropylene, the nozzles 14 are activated to nebulize a quantity of water adequate to return the temperature of the material to the desired value.

The softened material, filled and delivered from the container is collected by means that subject it to a further steps of treatment that envisages at least its densification, i.e. bulk density increase, or its pelletization; that is to say, in this step the material is transformed into a semi-finished product (granule or densified product) in a form that can be fed to an extruder or another moulding machine in which metering of the filler is no longer required, but only injection or extrusion of the semi-finished product.

If required, the finished material, in particular if granulated into pellets, is subjected to homogenization in a mixing silo (known to the art and not shown in the figure) and then packaged.

The process is performed continuously and material is added as it is collected from the base by means of the extruder; a typical process produces 800 kg/hour of recycled polypropylene from 400 kg/hour of polypropylene sheets filled with 400 kg/hour of calcium carbonate in a 2000 litre vertical container (hot mill) with a stirring device that rotates at 800/1000 rpm and a delivery extruder with a L/D ratio of 32, provided with degassing, continuous filter and final granulator. The various processing parameters are controlled by sensors and a PLC that manages the apparatus in an substantially automatic manner. Material being fed to the container is weighed by four loading cells while it is being transported along the conveyor 18, which is activated according to the quantity of material present in the container and the condition of this. The material is disintegrated and softened by the action of the stirring device and the blades 3 and 3a, so that a gradient of material is formed in the container, with material still in sheets in the upper part and softened material in the lower part of the container. The metering device 7 delivers the quantity of filler requested for the weight loaded in the area of the container in which the material is softened (130-140°C for polypropylene) and the filler is mixed to the material which is then collected through the opening 19 by the extruder 5. The material is plasticized until molten in the extruder, degassed, filtered, further filler is added if necessary (the same or different from the one previously added in the container) and granulated into pellets. If so wished, in a last and additional phase of processing the pellets can be taken to a mixing silo for further homogenization of the final product.

The cost of the product is about 30% lower than the same product obtained according to the prior art.

## Claims

1. Process for producing filled thermoplastic polymers, **characterized in that** it comprises the steps of: feeding a base thermoplastic material to a container
(1) provided with a device for mixing and stirring (2, 3); soften the base thermoplastic material; feeding the filler required to said device; collecting the softened and filled material from said container and subjecting it to at least a densification process.

2. Process as claimed in claim 1, wherein said material is softened by stirring and disintegration.

3. Process as claimed in claim 1 or 2, wherein in that said material is cooled by adding water to said container.

4. Process as claimed in one of the previous claims, wherein the softened and filled material delivered from said container is granulated.

5. Process as claimed in one of the previous claims, wherein the polymeric material is an industrial waste material to be recycled.

6. Apparatus to produce charged thermoplastic polymers, **characterized in that** it comprises a container (1) having a device for mixing and stirring (2) provided with means (3) to bring the thermoplastic polymeric material to its softening point, means (7,10) to feed a filler to said container; means (5) to collect the softened and filled material from said container and to subject said material to at least one densification step.

7. Apparatus as claimed in claim 6, wherein said container comprises means for disintegration (3, 3a).

8. Apparatus as claimed in claim 7, wherein said means to feed a filler comprise gravimetric metering means (7) positioned physically detached in relation to said container (1).

9. Apparatus as claimed in claim 7 or 8, wherein said means for feeding (10) are connected to the portion of said container in which the stirred material is in a softened state.

10. Apparatus as claimed in claim 9, **characterized in that** it comprises means of screening (13) the outlet (12) of the means for feeding the filler to said stirring container.

11. Apparatus as claimed in one of the claims from 6 to 10, **characterized in that** it comprises means (14,15) to feed water and/or oil to said container.

12. Apparatus as claimed in one of the claims from 6 to 11, **characterized in that** said means to treat the material being delivered comprise an extruder and a granulator (6).
